# EUROPEAN PATENT APPLICATION

(11) **EP 3 757 152 A1**
(43) Date of publication of application: **30.12.2020**
(21) Application number: 19183310.2
(22) Date of filing: 28.06.2019
(51) Int. Cl.: C08J 3/22, C08J 11/04, C08J 11/22, C08K 5/01, C08K 5/14

(54) **CONTROLLED RHEOLOGY MODIFIED MIXED-PLASTIC POLYETHYLENE BLEND**

(71) Applicant: Borealis AG, 1220 Vienna (AT)
(72) Inventor: LIU, Yi, 4021 Linz (AT); KAHLEN, Susanne, 4021 Linz (AT); BRAUN, Hermann, 4021 Linz (AT)
(74) Representative: Maiwald Patent- und Rechtsanwaltsgesellschaft mbH

(57) **Abstract**

A process for providing a controlled rheology modified mixed-plastic-polyethylene blend having a melt flow rate of 0.1 to 0.45 g/10 min (ISO 1133, 2.16 kg load, 190°C) from a mixed-plastic-polyethylene reactant blend originating from 90 to 100 wt.-% from a waste stream, the process comprising:
a) providing a mixed-plastic-polyethylene reactant blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative ¹³C{¹H}-NMR,
b) providing a peroxide masterbatch containing a polyolefin resin and 2.0 to 7.0 wt.-% of a peroxide with the peroxide having a half life time of 5 to 15 hours at 120°C at a concentration of 0.1 M in benzene,
c) melt compounding the mixed-plastic-polyethylene reactant blend with 0.1 to 0.5 wt.-% of the peroxide masterbatch optionally in the presence of antioxidant in an extruder with a screw speed of from 100 to 400 rpm and a barrel temperature set in the range from 150°C to 250°C, thereby
yielding the controlled rheology modified mixed-plastic-polyethylene blend having a melt flow rate of 0.1 to 0.45 g/10 min (ISO 1133, 2.16 kg load, 190°C).

## Description

### Field of the Invention

The present invention relates to upgrading of PE recycling streams using peroxides.

### Background

The use of peroxides for treating recycling material is well-known inter alia from EP1036771. EP2770016 also describes adjusting recycled HDPE by melt blending. WO201700138441 further describes reduction of gels in polyethylene by addition of free radical initiator composition. WO2017202802 also describes adjustment of melt flow rate by use of peroxide. WO2017199202 describes the treatment of thermoplastic waste material in the molten state with an organic radical having one or more carbon-carbon double bonds. It is further well known that melt compounding in the presence of a peroxide may deteriorate the impact strength, whilst detrimentally increasing the gel count and increasing the XHU content.

A particular problem in recycled polyethylene materials is the presence of high amounts of black spots and gels which render the materials unsuitable for countless uses. In addition to that unacceptable variations as to impact strength are conventionally observed in recycled polyethylene blends.

The problem remains that recycled polyethylene blends containing substantial amounts of poly-alpha-olefin(co)polymers, polyamide and other contaminates frequently have low impact, high amount of black spots, high gel. A further problem originates from the fact that recycled polyethylene blends containing substantial amounts of alpha-olefins, polyamide and other contaminates should have a melt flow rate at a load of 2.16 kg in the range of 0.10 to 0.45 g/10min for a number of final applications.

### Summary of the Invention

The present invention provides a process addressing one or more of these objects and a controlled rheology modified mixed-plastic polyethylene blend. The present invention is also concerned with the use of a specific peroxide masterbatch at low screw speeds of an extruder for simultaneously improving impact properties and/or black spot and/or gel content at low final XHU values.

The present invention is based on the finding that specific measures including choice of peroxide having a half life time of 5 to 15 hours together with specific screw speed and optionally and preferentially isotherm temperature profile of the barrel allow the user to overcome the limitations.

The present invention particularly provides
a process for providing a controlled rheology modified mixed-plastic-polyethylene blend having a melt flow rate of 0.1 to 0.45 g/10 min (ISO 1133, 2.16 kg load, 190°C), more preferably of from 0.2 to 0.45 g/10 min, from a mixed-plastic-polyethylene reactant blend originating from 90 to 100 wt.-% from a waste stream, the process comprising:
a) providing a mixed-plastic-polyethylene reactant blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative ¹³C{¹H}-NMR,
b) providing a peroxide masterbatch containing a polyolefin resin and 2.0 to 7.0 wt.-% of a peroxide with the peroxide having a half life time of 5 to 15 hours at 120°C at a concentration of 0.1 M in benzene,
c) melt compounding the mixed-plastic-polyethylene reactant blend with 0.1 to 0.5 wt.-% of the peroxide masterbatch optionally in the presence of antioxidant in an extruder with a screw speed of from 100 to 400 rpm and a barrel temperature set in the range from 150°C to 250°C, thereby
yielding the controlled rheology modified mixed-plastic-polyethylene blend.

The present invention further provides a controlled rheology modified mixed-plastic polyethylene blend obtainable by the process as described herein, i.e. by
a) providing a mixed-plastic-polyethylene reactant blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative ¹³C{¹H}-NMR,
b) providing a peroxide masterbatch containing a polyolefin resin and 2.0 to 7.0 wt.-% of a peroxide with the peroxide having a half life time of 5 to 15 hours at 120°C at a concentration of 0.1 M in benzene,
c) melt compounding the mixed-plastic-polyethylene reactant blend with 0.1 to 0.5 wt.-% of the peroxide masterbatch optionally in the presence of antioxidant in an extruder with a screw speed of from 100 to 400 rpm and a barrel temperature set in the range from 150°C to 250°C, thereby
d) yielding the controlled rheology modified mixed-plastic-polyethylene blend having a melt flow rate of 0.1 to 0.45 g/10 min (ISO 1133, 2.16 kg load, 190°C) and further having an impact strength (ISO 189-1, 23°C) of 20.0 to 40.0 kJ/m² and a tensile modulus of 750 to 1100 MPa (ISO 527-1,2) when measured on an injection molded test specimen.

In a further aspect the present invention is concerned with the use of a
- peroxide masterbatch containing a polypropylene resin and 2.0 to 7.0 wt.-% of a peroxide with the peroxide having a half life time of 5 to 15 hours at 120°C at a concentration of 0.1 M in benzene
for providing impact strength (ISO 189-1, 23°C) of at least 20 kJ/m² of a mixed-plastic-polyethylene reactant blend originating from 90 to 100 wt.-% from a waste stream and having
- a melt flow rate (ISO 1133, 2.16 kg load, 190°C) of 0.50 to 1.4 g/10min; and
- a content of units derived from ethylene of 80 to 95 wt.-% as determined by quantitative ¹³C{¹H}-NMR
by
melt compounding the mixed-plastic polyethylene reactant blend in the presence of said peroxide masterbatch, optionally in the presence of antioxidant, in an extruder with a screw speed of from 100 to 400 rpm and a barrel temperature set in the range from 150°C to 250°C.

The present invention also concerns the use of a
- peroxide masterbatch containing a polypropylene resin and 2.0 to 7.0 wt.-% of a peroxide with the peroxide having a half life time of 5 to 15 hours at 120°C at a concentration of 0.1 M in benzene
for lowering polyethylene black spot values, as defined in the methods under gel count and black spots, of a mixed-plastic-polyethylene reactant blend originating originating from 90 to 100 wt.-% from a waste stream and having
- a melt flow rate (ISO 1133, 2.16 kg load, 190°C) of 0.50 to 1.4 g/10min; and
- a content of units derived from ethylene of 80 to 95 wt.-% as determined by quantitative ¹³C{¹H}-NMR
by
melt compounding the mixed-plastic polyethylene reactant blend in the presence of said peroxide masterbatch, optionally in the presence of antioxidant, in an extruder with a screw speed of from 100 to 400 rpm and a barrel temperature set in the range from 150°C to 250°C.

In yet a further aspect, the present invention concerns the use of a
- peroxide masterbatch containing a polypropylene resin and 2.0 to 7.0 wt.-% of a peroxide with the peroxide having a half life time of 5 to 15 hours at 120°C at a concentration of 0.1 M in benzene
for lowering polyethylene gel values, as defined in the methods under gel count and black spots, of a mixed-plastic-polyethylene reactant blend originating from 90 to 100 wt.-% from a waste stream and having
- a melt flow rate (ISO 1133, 2.16 kg load, 190°C) of 0.50 to 1.4 g/10min; and
- a content of units derived from ethylene of 80 to 95 wt.-% as determined by quantitative ¹³C{¹H}-NMR
by
melt compounding the mixed-plastic polyethylene reactant blend in the presence of said peroxide masterbatch, optionally in the presence of antioxidant, in an extruder with a screw speed of from 100 to 400 rpm and a barrel temperature set in the range from 150°C to 250°C.

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

For the purposes of the present description and of the subsequent claims, the term "mixed-plastic-polyethylene" indicates a polymer material including predominantly units derived from ethylene apart from other polymeric ingredients of arbitrary nature. Such polymeric ingredients may for example originate from monomer units derived from alpha olefins such as propylene, butylene, octene, and the like, styrene derivatives such as vinylstyrene, substituted and unsubstituted acrylates, substituted and unsubstituted methacrylates.

A mixed-plastic-polyethylene reactant blend denotes the starting reactant blend containing the mixed plastic-polyethylene as described above. Conventionally further components such as filers, including organic and inorganic fillers for example talc, chalk, carbon black, and further pigments such as TiO₂ as well as paper and cellulose may be present. In a specific and preferred embodiment the waste stream is a consumer waste stream. Such material is characterized by a limonene content of from 10 to 500 mg/kg (as determined using solid phase microextraction (HS-SPME-GC-MS) by standard addition).

Waste stream refers to objects having completed at least a first use cycle (or life cycle), i.e. having already served their first purpose. Waste streams also include manufacturing scrap, which does not normally reach a consumer.

The term "virgin" denotes the newly produced materials and/or objects prior to their first use, which have not already been recycled.

If not indicated otherwise "%" refers to weight-%.

Masterbatch denotes the mixture of the peroxide and the polymeric carrier as used herein.

Controlled rheology material is a material, which has been subjected to a modification by peroxide in an extrusion process.

Isothermal profile means that the temperature remains constant.

In the process according to the present invention for providing a controlled rheology modified mixed-plastic-polyethylene blend having a melt flow rate of 0.1 to 0.45 g/10 min (ISO 1133, 2.16 kg load, 190°C), a mixed plastic-polyethylene reactant blend is used as the starting material.

Such mixed-plastic-polyethylene reactant blend shall originate from 90 to 100 wt.-% from a waste stream. Preferably the mixed-plastic-polyethylene reactant blend shall originate for more than 95 wt.-% from a waste stream, more preferably for more than 98 wt.-% from waste material. Most preferably the mixed-plastic-polyethylene reactant blend originate for more than 99 wt.-% from a waste stream. Thus, the present invention stands in contrast to other numerous inventions in the field aiming at the improvement of properties by the addition of virgin polymers such as compatibilizers.

The origin of the waste stream is not fixed. Usually the waste stream will originate from conventional collecting systems such as implemented in the European Union. The waste stream can be a stream from post-consumer waste or industrial waste or both. Detection of post-consumer waste is easily possible by detection of limonene content.

The mixed-plastic-polyethylene reactant blend originating from 90 to 100 wt.-% from a waste stream has a melt flow rate (ISO 1133, 2.16 kg load, 190°C) of 0.50 to 1.4 g/10min and a content of units derived from ethylene of 80 to 95 wt.-% as determined by quantitative ¹³C{¹H}-NMR. Preferably, the mixed-plastic-polyethylene reactant blend has a melt flow rate (ISO 1133, 2.16 kg load, 190°C) of 0.55 to 1.2 g/10min and most preferably 0.60 to 1.0 g/10min.

Mixed-plastic-polyethylene reactant blends as used herein are commercially available.

The mixed-plastic-polyethylene reactant blend according to the present invention preferably includes
a) 80 to 95 wt.-% of units derived from ethylene as determined by quantitative ¹³C{¹H}-NMR and further
b) 0 to 10 wt.-% units derived from alpha olefin(s)
c) 0 to 3.0 wt.-% stabilizers
d) 0 to 3.0 wt.-% talc
e) 0 to 3.0 wt.-% chalk
f) 0 to 6.0 wt.-% further components
all percentages with respect to the mixed-plastic-polyethylene reactant blend, whereby the total of components a), b), c), d), e) and f), add up to 100 wt.-%.

More preferably the mixed-plastic-polyethylene reactant blend according to the present invention includes
a) 80 to 95 wt.-% of units derived from ethylene as determined by quantitative ¹³C{¹H}-NMR and further
b) 0 to 10 wt.-% units derived from alpha olefin(s)
c) 0 to 3.0 wt.-% stabilizers
d) 0 to 2.0 wt.-% talc
e) 0 to 2.0 wt.-% chalk
f) 0 to 5.0 wt.-% further components
all percentages with respect to the mixed-plastic-polyethylene reactant blend, whereby the total of components a), b), c), d), e) and f), add up to 100 wt.-%.

Most preferably the mixed-plastic-polyethylene reactant blend according to the present invention includes
a) 80 to 95 wt.-% of units derived from ethylene as determined by quantitative ¹³C{¹H}-NMR and further
b) 0 to 6 wt.-% units derived from alpha olefin(s)
c) 0 to 3.0 wt.-% stabilizers
d) 0 to 2.0 wt.-% talc
e) 0 to 2.0 wt.-% chalk
f) 0 to 2.0 wt.-% further components
all percentages with respect to the mixed-plastic-polyethylene reactant blend, whereby the total of components a), b), c), d), e) and f), add up to 100 wt.-%.

In the process according the present invention there is provided a peroxide masterbatch containing a polyolefin resin and 2.0 to 7.0 wt.-% of a peroxide with the peroxide having a half life time of 5 to 15 hours at 120°C at a concentration of 0.1 M in benzene. Such peroxide masterbatches are commercially available. Alternatively, masterbatches as described can be made by compounding the ingredients under mild conditions well known in the art.

In an aspect of the present invention, 0.1 to 0.5 wt.-% of the peroxide masterbatch, optionally and preferably in the presence of antioxidant, in an extruder with a screw speed of from 100 to 400 rpm and a barrel temperature set in the range from 150°C to 250°C are used in the melt compounding step. The screw speed of this step preferably is from 100 to 250 rpm, more preferably from 100 to 150 rpm, and most preferably from 100 to 125 rpm. The barrel temperature is preferably set in the range of from 200 to 250°C, more preferably set in the range of from 200°C to 230°C.

The total peroxide amount with respect to the resulting blend obtained by extrusion is between 20 and 350 ppm, preferably between 50 and 250 ppm.

The process yields a controlled rheology modified mixed-plastic-polyethylene blend having a melt flow rate of 0.1 to 0.45 g/10 min (ISO 1133, 2.16 kg load, 190°C), more preferably of rom 0.2 to 0.45 g /10 min. This blend has a good level of impact strength essentially not dependent on the impact strength of the mixed-plastic-polyethylene reactant blend.

It is preferred that the ratio of melt flow rate of mixed-plastic-polyethylene reactant blend (ISO 1133, 2.16 kg load, 190°C) versus melt flow rate of controlled rheology modified mixed-plastic-polyethylene blend (ISO 1133, 2.16 kg load, 190°C) is in the range of 1.1 to 3.0, more preferably in the range of 1.2 to 2.8.

In a further aspect of the present invention, the density of the mixed-plastic-polyethylene reactant blend is in the range of 950 to 985 kg/m³, more preferably in the range of 955 to 985 kg/m³.

In yet a further aspect, the melt flow rate the mixed-plastic-polyethylene reactant blend (ISO 1133, 5.0 kg load, 190°C) is in the range of 2.0 to 5.0 g/10min, more preferably in the range of 2.2 to 4.5 g/10 min.

The process according to the present invention results in a change of the rheological properties. Preferably, the ratio of SHI_{2.7/210} of the mixed-plastic-polyethylene reactant blend measured by dynamic shear measurement according to ISO 6721-1 and ISO 6721-10 versus the SHI_{2.7/210} of the controlled rheology modified mixed-plastic-polyethylene blend measured by dynamic shear measurement according to ISO 6721-1 and ISO 6721-10 is from 1.20 to 3.0, more preferably 1.30 to 2.80.

The mixed-plastic-polyethylene reactant blend preferably has a shear thinning index SHI_{2.7/210} of 25 to 45 measured by dynamic shear measurement according to ISO 6721-1 and ISO 6721-10.

The peroxide is preferably selected from 2,5-Dimethyl 2,5-di(tert-butylperoxy) hexane and di(tert-butylperoxyisopropyl) benzene, most preferably the peroxide is 2,5-Dimethyl 2,5-di(tert-butylperoxy) hexane.

In a further aspect, the barrel temperature profile is an isothermal profile.

The process according to the present invention enables the provision of
a controlled rheology modified mixed-plastic polyethylene blend having
(i) a tensile modulus (ISO 527-1,2) of from 750 to 1100 MPa when measured on an injection molded test specimen; and/or
(ii) an impact strength (ISO 189-1, 23°C) of from 20.0 to 40.0 kJ/m², and/or
(iii) an OCS gel content of all sizes of from 2000 to 50000 / m² when measured on a film of a OCS meter; and/or
(iv) an XHU (ISO 16152; first edition; 2005-07-01, 25 °C) of from 0.10 to 1.0 wt%, more preferably from 0.10 to 0.50 wt%

### Detailed Description

In the following, some particularly preferred embodiments shall be described.

A first and particularly preferred embodiment concerns
a process for providing a controlled rheology modified mixed-plastic-polyethylene blend having a melt flow rate of 0.1 to 0.45 g/10 min (ISO 1133, 2.16 kg load, 190°C)from a mixed-plastic-polyethylene reactant blend originating from 90 to 100 wt.-% from a waste stream, whereby the mixed-plastic-polyethylene reactant blend includes
a) 80 to 95 wt.-% of units derived from ethylene as determined by quantitative ¹³C{¹H}-NMR and further
b) 0 to 10 wt.-% units derived from alpha olefin(s)
c) 0 to 3.0 wt.-% stabilizers
d) 0 to 3.0 wt.-% talc
e) 0 to 3.0 wt.-% chalk
f) 0 to 6.0 wt.-% further components
all percentages with respect to the mixed-plastic-polyethylene reactant blend, whereby the total of components a), b), c), d), e) and f), add up to 100 wt.-%,
the process comprising:
a) providing a mixed-plastic-polyethylene reactant blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative ¹³C{¹H}-NMR,
b) providing a peroxide masterbatch containing a polyolefin resin and 2.0 to 7.0 wt.-% of a peroxide with the peroxide having a half life time of 5 to 15 hours at 120°C at a concentration of 0.1 M in benzene,
c) melt compounding the mixed-plastic-polyethylene reactant blend with 0.1 to 0.5 wt.-% of the peroxide masterbatch optionally in the presence of antioxidant in an extruder with a screw speed of from 100 to 400 rpm and a barrel temperature set in the range from 150°C to 250°C, thereby
   yielding the controlled rheology modified mixed-plastic-polyethylene blend.

A second and particularly preferred embodiments concerns a
process for providing a controlled rheology modified mixed-plastic-polyethylene blend having a melt flow rate of 0.1 to 0.45 g/10 min (ISO 1133, 2.16 kg load, 190°C) from a mixed-plastic-polyethylene reactant blend originating from 90 to 100 wt.-% from a waste stream,
whereby the mixed-plastic-polyethylene reactant blend includes
a) 80 to 95 wt.-% of units derived from ethylene as determined by quantitative ¹³C{¹H}-NMR and further
b) 0 to 10 wt.-% units derived from alpha olefin(s)
c) 0 to 3.0 wt.-% stabilizers
d) 0 to 3.0 wt.-% talc
e) 0 to 3.0 wt.-% chalk
f) 0 to 6.0 wt.-% further components
all percentages with respect to the mixed-plastic-polyethylene reactant blend, whereby the total of components a), b), c), d), e) and f), add up to 100 wt.-%,
wherein the mixed-plastic-polyethylene reactant blend has a shear thinning index SHI_{2.7/210} of 25 to 45 measured by dynamic shear measurement according to ISO 6721-1 and ISO 6721-10,
the process comprising:
a) providing a mixed-plastic-polyethylene reactant blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative ¹³C{¹H}-NMR,
b) providing a peroxide masterbatch containing a polyolefin resin and 2.0 to 7.0 wt.-% of a peroxide masterbatch with the peroxide being 2,5-Dimethyl 2,5-di(tert-butylperoxy) hexane,
c) melt compounding the mixed-plastic-polyethylene reactant blend with 0.1 to 0.5 wt.-% of the peroxide masterbatch optionally in the presence of antioxidant in an extruder with a screw speed of from 100 to 400 rpm and a barrel temperature set in the range from 150°C to 250°C, whereby the barrel temperature profile is an isothermal profile;
thereby yielding the controlled rheology modified mixed-plastic-polyethylene blend having a melt flow rate of 0.1 to 0.45 g/10 min (ISO 1133, 2.16 kg load, 190°C).

The present invention also concerns as a preferred embodiment a controlled rheology modified mixed-plastic polyethylene blend obtainable by a process from a mixed-plastic-polyethylene reactant blend originating from 90 to 100 wt.-% from a waste stream,
whereby the mixed-plastic-polyethylene reactant blend includes
a) 80 to 95 wt.-% of units derived from ethylene as determined by quantitative ¹³C{¹H}-NMR and further
b) 0 to 10 wt.-% units derived from alpha olefin(s)
c) 0 to 3.0 wt.-% stabilizers
d) 0 to 3.0 wt.-% talc
e) 0 to 3.0 wt.-% chalk
f) 0 to 6.0 wt.-% further components
all percentages with respect to the mixed-plastic-polyethylene reactant blend, whereby the total of components a), b), c), d), e) and f), add up to 100 wt.-%,
the process comprising:
a) providing a mixed-plastic-polyethylene reactant blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative ¹³C{¹H}-NMR,
b) providing a peroxide masterbatch containing a polyolefin resin and 2.0 to 7.0 wt.-% of a peroxide with the peroxide being 2,5-Dimethyl 2,5-di(tert-butylperoxy) hexane,
c) melt compounding the mixed-plastic-polyethylene reactant blend with 0.1 to 0.5 wt.-% of the peroxide masterbatch, optionally in the presence of antioxidant, in an extruder with a screw speed of from 100 to 400 rpm and a barrel temperature set in the range from 150°C to 250°C, whereby the barrel temperature profile is an isothermal profile;
thereby
yielding the controlled rheology modified mixed-plastic-polyethylene blend having
a melt flow rate of 0.1 to 0.45 g/10 min (ISO 1133, 2.16 kg load, 190°C), with the controlled rheology modified mixed-plastic polyethylene blend having
(i) a tensile modulus (ISO 527-1,2) of from 750 to 1100 MPa when measured on an injection molded test specimen; and
(ii) an impact strength (ISO 189-1, 23°C) of from 20.0 to 40.0 kJ/m², and/or
(iii) an OCS gel content of all sizes of from 2000 to 50000 / m² when measured on a film of a OCS meter; and/or
(iv) an XHU (ISO 16152; first edition; 2005-07-01, 25 °C) of from 0.10 to 1.0 wt%, more preferably from 0.10 to 0.50 wt%.

### Experimental Section

The following Examples are included to demonstrate certain aspects and embodiments of the invention as described in the claims. It should be appreciated by those of skill in the art, however, that the following description is illustrative only and should not be taken in any way as a restriction of the invention.

### Test Methods

**a)Tensile modulus** was measured according to ISO 527-2 (cross head speed = 1 mm/min; test speed 50 mm/min at 23°C) using injection moulded specimens as described in EN ISO 1873-2 (dog bone shape, 4 mm thickness). The measurement was done after 96 h conditioning time of the specimen.
**b) Impact strength** was determined as Charpy Notched Impact Strength according to ISO 179-1 eA at +23°C on injection moulded specimens of 80 x 10 x 4 mm prepared according to EN ISO 1873-2. According to this standard samples are tested after 96 hours.
**c) Units derived from C2**
   Quantitative nuclear-magnetic resonance (NMR) spectroscopy was used to quantify the ethylene content of the polymers.
   Quantitative ¹³C{¹H} NMR spectra were recorded in the solution-state using a Bruker Avance III 400 NMR spectrometer operating at 400.15 and 100.62 MHz for ¹H and ¹³C respectively. All spectra were recorded using a ¹³C optimised 10 mm extended temperature probehead at 125°C using nitrogen gas for all pneumatics. Approximately 200 mg of material was dissolved in 3 ml of 1,2-tetrachloroethane-*d*₂ (TCE-*d*₂) along with chromium (III) acetylacetonate (Cr(acac)₃) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative ¹³C{¹H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950). The comonomer fraction was quantified using the method of Wang et. al. (Wang, W-J., Zhu, S., Macromolecules 33 (2000), 1157) through integration of multiple signals across the whole spectral region in the ¹³C{¹H} spectra. This method was chosen for its robust nature and ability to account for the presence of regio-defects when needed.
**d) Talc and chalk content:** measured by Thermogravimetric Analysis (TGA);
   experiments were performed with a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20°C/min. The weight loss between ca. 550°C and 700°C (WCO2) was assigned to CO2 evolving from CaCO3, and therefore the chalk content was evaluated as: $Chalk content = 100 / 44 \times WCO 2$ Afterwards the temperature was lowered to 300°C at a cooling rate of 20°C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as: $Ash content = \left(Ash residue\right) - 56 / 44 \times WCO 2 - Wcb$ Where Ash residue is the weight% measured at 900°C in the first step conducted under nitrogen. The ash content is estimated to be the same as the talc content for the investigated recyclates.
**e) Further components**
   In addition to units derived from alpha olefin(s), talc, chalk and stabilizers the mixed-plastic-polyethylene reactant blend may comprise further components as a result of the recycling process. Examples of such further components are other polymeric species, for example polystyrene, as well as paper and wood. These further components are not individually quantified, rather the total content of further components is calculated by subtracting the values of ethylene, alpha-olefin(s), stabilizer, talc and chalk contents from the overall weight.
**f) MFR**
   Melt flow rates were measured with a load of either 2.16 kg or 5.0 kg as indicated at a temperature of 190°C. The melt flow rate is that quantity of polymer in grams which the test apparatus standardized to ISO 1133 extrudes within 10 minutes at a temperature of 190°C under a load of 2.16 kg or 5.0 kg.
**g) Limonene content**
   This method allows figuring out the recycling nature of a raw material.
   Limonene quantification was carried out using solid phase microextraction (HS-SPME-GC-MS) by standard addition.
   50 mg ground samples were weighed into 20 mL headspace vials and after the addition of limonene in different concentrations and a glass-coated magnetic stir bar, the vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene were used in combination with some of the samples tested in this application. For quantification, ion-93 acquired in SIM mode was used. Enrichment of the volatile fraction was carried out by headspace solid phase microextraction with a 2 cm stable flex 50/30 pm DVB/Carboxen/PDMS fibre at 60°C for 20 minutes. Desorption was carried out directly in the heated injection port of a GCMS system at 270°C.

### GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

**h) Shear thinning indexes (SHI)**
   were calculated according to Heino ^{1, 2)} (below).
   **SHI** is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.
   1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362
   2) The influence of molecular structure on some rheological properties of polyethylene. Heino, Eeva-Leena. Borealis Polymers Oy, Porvoo, Finland. Annual Transactions of the Nordic Rheology Society, 1995
**i) details for Shear thinning index SHI2.7/210**
   The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression molded plates using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by $γ \left(t\right) = {γ}_{0} sin \left(ωt\right)$ (1)

If the applied strain is within the linear viscoelastic regime, the resulting sinusoidal stress response can be given by $σ \left(t\right) = {σ}_{0} sin \left(ωt+δ\right)$ (2) where σ₀, and γ₀ are the stress and strain amplitudes, respectively; ω is the angular frequency; δ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, η*, the dynamic shear viscosity, η', the out-of-phase component of the complex shear viscosity, η" and the loss tangent, tan η, which can be expressed as follows: $Gʹ = \frac{{σ}_{0}}{{γ}_{0}} cosδ \left[Pa\right]$ (3) $Gʺ = \frac{{σ}_{0}}{{γ}_{0}} sinδ \left[Pa\right]$ (4) $G * = Gʹ + iGʺ \left[Pa\right]$ (5) $η * = ηʹ - iηʺ \left[Pa⋅s\right]$ (6) $ηʹ = \frac{Gʺ}{ω} \left[Pa⋅s\right]$ (7) $ηʺ = \frac{{G}^{{′}_{T}}}{ω} \left[Pa⋅s\right]$ (8)

The determination of so-called Shear Thinning Index, which correlates with MWD and is independent of Mw, is done as described in equation 9. ${SHI}_{\left(x/y\right)} = \frac{Eta ∗ for \left(G∗=x kPa\right)}{Eta ∗ for \left(G∗=y kPa\right)}$ (9)

For example, the SHI_{(2.7/210)} is defined by the value of the complex viscosity, in Pa s, determined for a value of G* equal to 2.7 kPa, divided by the value of the complex viscosity, in Pa s, determined for a value of G* equal to 210 kPa.

The values of storage modulus (G'), loss modulus (G"), complex modulus (G*) and complex viscosity (η*) were obtained as a function of frequency (ω).

Thereby, e.g. η*_{300rad/s} (eta*_{300rad/s}) is used as abbreviation for the complex viscosity at the frequency of 300 rad/s and n*_{0.05rad/s} (eta*_{0.05rad/s}) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. tan_{0.05} is used as abbreviation for the ratio of the loss modulus (G") and the storage modulus (G') at 0.05 rad/s and tan₃₀₀ is used as abbreviation for the ratio of the loss modulus (G") and the storage modulus (G') at 300 rad/s.

The elasticity balance tan_{0.05}/tan₃₀₀ is defined as the ratio of the loss tangent tan_{0.05} and the loss tangent tan₃₀₀.

Besides the above mentioned rheological functions one can also determine other rheological parameters such as the so-called elasticity index *EI(x).* The elasticity index *EI(x)* is the value of the storage modulus (G') determined for a value of the loss modulus (G") of *x* kPa and can be described by equation 10. $EI \left(x\right) = Gʹ for \left(Gʺ=x kPa\right) * \left[Pa\right]$ (10)

For example, the *EI*(5kPa) is the defined by the value of the storage modulus (G'), determined for a value of G" equal to 5 kPa.

The viscosity eta₇₄₇ is measured at a very low, constant shear stress of 747 Pa and is inversely proportional to the gravity flow of the polyethylene composition, i.e. the higher eta₇₄₇ the lower the sagging of the polyethylene composition. The polydispersity index, *PI,* is defined by equation 11. $PI = \frac{{10}^{5}}{Gʹ \left({ω}_{COP}\right)} , { ω}_{COP} = ω for \left(Gʹ=Gʺ\right)$ (11) where ω_{COP} is the cross-over angular frequency, determined as the angular frequency for which the storage modulus, G', equals the loss modulus, G". The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

### References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.
[2] "The influence of molecular structure on some rheological properties of polyethylene", Heino, E.L., Borealis Polymers Oy, Porvoo, Finland, Annual Transactions of the Nordic Rheology Society, 1995.
[3] "Definition of terms relating to the non-ultimate mechanical properties of polymers", Pure & Appl. Chem., Vol. 70, No. 3, pp. 701-754, 1998.

### j) PE Gel content and Black spots

The gel count was measured with a gel counting apparatus consisting of a measuring extruder, ME 25 / 5200 V1, 25*25D, with five temperature conditioning zones adjusted to a temperature profile of 170/180/190/190/190°C), an adapter and a slit die (with an opening of 0.5 * 150 mm). Attached to this were a chill roll unit (with a diameter of 13 cm with a temperature set of 50°C), a line camera (CCD 4096 pixel for dynamic digital processing of grey tone images) and a winding unit.

For the gel count content measurements the materials were extruded at a screw speed of 30 rounds per minute, a drawing speed of 3-3.5 m/min and a chill roll temperature of 50°C to make thin cast films with a thickness of 70 µm and a width of approximately 110 mm.

The resolution of the camera is 25 µm x 25 µm on the film.

The camera works in transmission mode with a constant grey value (auto.set. margin level = 170) by using one of two different sensitivity levels to distinguish between Gels and Contaminants e.g. Black spots

The system is able to decide between 256 grey values from black = 0 to white = 256.
1 level dark: 25% (Gels)
2 level dark: 10% (Black spots)

For each material the average number of gel dots on a film surface area of 10 m² was inspected by the line camera. The number of black spots are detected in the same way. The line camera was set to differentiate the gel dot/black spot size according to the following:

### Gel/black spot size

100 µm to 299 µm
300 µm to 599 µm
600 µm to 999 µm
above 1000 µm

### k) Puncture energy

Puncture energy is determined in the instrumented falling weight test according to ISO 6603-2 using injection moulded plaques of 60x60x1 mm and a test speed of 2.2 m/s, clamped, lubricated striker with 20 mm diameter. The reported puncture energy results from an integral of the failure energy curve measured at (60x60x1 mm).

### l) Xylene Hot Unsolubles (XHU)

XHU is determined at 25°C according ISO 16152; first edition; 2005-07-01. The part which remains insoluble is denoted XHU.

### Experiments

Several samples/qualities of Purpolen PE (by MTM) differing as to melt flow rate and also rheology were selected. The properties thereof are detailed in Table 1.

**Table 1:**

| | Purpolen PE-1 | Purpolen PE-2 | Purpolen PE-3 | Purpolen PE-4 |
|---|---|---|---|---|
| Density (kg/m³) | 958 | 957 | 983 | 957 |
| Ethylene content (wt%) | 94.3 | 94.1 | 87.3 | 94.7 |
| Ash content (%) | 0.4 | 0.5 | 4.0 | 0.3 |
| MFR₂ (g/10min) | 0.99 | 0.55 | 0.80 | 0.52 |
| MFR₅ (g/10min) | 4.37 | 2.73 | 3.55 | 2.39 |
| SHI (2.7/210) | 31 | 41 | 40 | 40 |
| eta (0.05 rad/s) | 23921 | 28632 | 27617 | 35515 |
| eta (300 rad/s) | 603 | 597 | 562 | 694 |
| Tensile +23°C modulus (MPa) | 901 | 872 | 938 | 854 |
| TGA WCO2 (wt%) | 0.24 | 0.22 | 0.24 | 0.19 |
| TGA Wcb (wt%) | 0 | 0 | 0 | 0 |
| TGA Ash residue (wt%) | 0.93 | 0.84 | 2.73 | 0.69 |
| Limonene content of from 10 to 500 mg/kg | yes | yes | yes | yes |

It is easily recognizable there is are quite some variations as to density, ash content, MFR₂, MFR₅, SHI_{2.7/210}, eta_{0.05rad/s}, eta_{300rad/s}, and also tensile modulus. As a representative example for the limonene content, Purpolen PE-4 had a limonene content of 163 mg/kg.

### Results:

### Comparative examples:

CE1 to CE4 are formed by compounding Purpolen PE-1 to Purpolen PE-4 respectively. Compounding was conducted in a ZSK32 extruder, with a screw speed of 120 rpm and an isothermal temperature profile of 230°C.

### Inventive examples:

The inventive examples were obtained by melt blending Purpolen PE with 0.2 wt.-% of Irganox B 225 (antioxidant) and a specified amount of a polypropylene-based peroxide masterbatch, containing 5 wt.-% of 2,5-Dimethyl 2,5-di(tert-butylperoxy) hexane, in a ZSK32 extruder, with a screw speed of 120 rpm and an isothermal temperature profile of 230°C, with the following compositions:

| | |
|---|---|
| **IE1:** | Purpolen PE-1 modified with 0.3 wt.-% masterbatch |
| **IE2:** | Purpolen PE-2 modified with 0.1 wt.-% masterbatch |
| **IE3:** | Purpolen PE-3 modified with 0.2 wt.-% masterbatch |
| **IE4:** | Purpolen PE-4 modified with 0.2 wt.-% masterbatch |

The characterization of the comparative and inventive mixed-plastic-polyethylene blends is given in Table 2.

**Table 2:**

| | CE1 | CE2 | CE3 | CE4 | IE1 | IE2 | IE3 | IE4 |
|---|---|---|---|---|---|---|---|---|
| Density (kg/m³) | 957.6 | 956.7 | 997.7 | 958.2 | 957 | 957 | 967 | 958 |
| MFR₂ (g/10min) | 0.76 | 0.47 | 0.63 | 0.60 | 0.37 | 0.41 | 0.42 | 0.40 |
| MFR₅ (g/10min) | 3.44 | 1.93 | 3.04 | 2.6 | 1.9 | 1.9 | 2.3 | 2.0 |
| SHI (2.7/210) | 38 | 57 | 54 | 40 | 79 | 70 | 97 | 55 |
| eta (0.05 rad/s) | 27333 | 42748 | 35561 | 31503 | 48303 | 51531 | 50474 | 47847 |
| eta (300 rad/s) | 583 | 678 | 590 | 641 | 637 | 708 | 602 | 741 |
| Tensile Modulus (+23°C) MPa | 871 | 851 | 921 | 818 | 929 | 865 | 960 | 824 |
| Impact strength +23°C (KJ/m²) | 15 | 25 | 13 | 20 | 26 | 27 | 22 | 21 |
| PE Black spots_(>1000) Avg (1/m²) | 393 | 293 | | 239 | 5 | 166 | | 75 |
| PE Black spots_(100-299) Avg (1/m²) | 6.2 | 17.9 | | 4.9 | 0.2 | 1.4 | | 1.1 |
| PE Black spots_(300-599) Avg (1/m²) | 476 | 401 | | 286 | 6 | 102 | | 55 |
| PE Black spots_(600-1000) Avg (1/m²) | 1558 | 995 | | 907 | 18 | 410 | | 176 |
| PE Black spots_Total (1/m²) | 2434 | 1706 | | 1436 | 29 | 679 | | 307 |
| PE Gel_(>1000) Avg (1/m²) | 880 | 665 | | 610 | 94 | 254 | | 119 |
| PE Gel_(100-299) Avg (1/m²) | 21782 | 17449 | | 16313 | 2117 | 6852 | | 12348 |
| PE Gel_(300-599) Avg (1/m²) | 9546 | 7110 | | 6650 | 1582 | 3705 | | 3229 |
| PE Gel_(600-1000) Avg (1/m²) | 2962 | 2066 | | 1762 | 902 | 1429 | | 839 |
| PE Gel_Total (1/m²) | 35172 | 27291 | | 25336 | 4695 | 12240 | | 16535 |
| Puncture energy +23°C 4_4m/s (J) | 9.7 | 11.7 | 7.3 | 11.7 | 8.4 | 11.0 | 5.9 | 10.8 |
| Puncture energy 0°C 4_4m/s (J) | 9.8 | 12.3 | 7.3 | 12.9 | 8.7 | 11.1 | 10 | 10.6 |
| XHU wt% | 0.21 | 0.14 | 0.23 | 1.34 | 0.25 | 0.17 | 0.29 | 0.23 |

It has been found that mixed-plastic-polyethylene reactant blends having poor impact strength can be optimized such that an acceptable level of at least 20 kJ/m² at 23°C is obtained. In case there is already a reasonable level of impact strength, impact strength is at least maintained on such level.

It further has been found that mixed-plastic-polyethylene reactant blends having very poor PE black spot values can be optimized such that a good level is obtained. Moreover, occurrence of PE gels could be significantly reduced over all gel sizes. In most of the cases, puncture energy could also be improved or at least maintained at a reasonable level. This is particularly impressive as no significant stiffness losses were observed.

## Claims

1. A process for providing a controlled rheology modified mixed-plastic-polyethylene blend having a melt flow rate of 0.1 to 0.45 g/10 min (ISO 1133, 2.16 kg load, 190°C), more preferably of from 0.2 to 0.45 g/10 min, from a mixed-plastic-polyethylene reactant blend originating from 90 to 100 wt.-% from a waste stream, the process comprising:
a) providing a mixed-plastic-polyethylene reactant blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative ¹³C{¹H}-NMR,
b) providing a peroxide masterbatch containing a polyolefin resin and 2.0 to 7.0 wt.-% of a peroxide with the peroxide having a half life time of 5 to 15 hours at 120°C at a concentration of 0.1 M in benzene,
c) melt compounding the mixed-plastic-polyethylene reactant blend with 0.1 to 0.5 wt.-% of the peroxide masterbatch optionally in the presence of antioxidant in an extruder with a screw speed of from 100 to 400 rpm and a barrel temperature set in the range from 150°C to 250°C, thereby
yielding the controlled rheology modified mixed-plastic-polyethylene blend.

2. Process according to claim 1, whereby the ratio of melt flow rate of mixed-plastic-polyethylene reactant blend (ISO 1133, 2.16 kg load, 190°C) versus melt flow rate of controlled rheology modified mixed-plastic-polyethylene blend (ISO 1133, 2.16 kg load, 190°C) is in the range of 1.1 to 3.0, more preferably in the range of 1.2 to 2.8.

3. Process according to claim 1 or 2, whereby the density of the mixed-plastic-polyethylene reactant blend is in the range of 950 to 985 kg/m³, more preferably in the range of 955 to 985 kg/m³.

4. Process according to any of the preceding claims, whereby the melt flow rate of the mixed-plastic-polyethylene reactant blend (ISO 1133, 5.0 kg load, 190°C) is in the range of 2.0 to 5.0 g/10min, more preferably in the range of 2.2 to 4.5 g/10 min.

5. Process according to any of the preceding claims, whereby the mixed-plastic-polyethylene reactant blend has a shear thinning index SHI_{2.7/210} of 25 to 45 measured by dynamic shear measurement according to ISO 6721-1 and ISO 6721-10.

6. Process according to any of the preceding claims, whereby the mixed-plastic-polyethylene reactant blend includes
a) 80 to 95 wt.-% of units derived from ethylene as determined by quantitative ¹³C{¹H}-NMR and further
b) 0 to 10 wt.-% units derived from alpha olefin(s)
c) 0 to 3.0 wt.-% stabilizers
d) 0 to 3.0 wt.-% talc
e) 0 to 3.0 wt.-% chalk
f) 0 to 6.0 wt.-% further components
all percentages with respect to the mixed-plastic-polyethylene reactant blend, whereby the total of components a), b), c), d), e) and f), add up to 100 wt.-%.

7. Process according to any of the preceding claims, whereby the mixed-plastic-polyethylene reactant blend has a limonene content of from 10 to 500 mg/kg as determined using solid phase microextraction (HS-SPME-GC-MS) by standard addition.

8. Process according to any of the preceding claims, whereby the peroxide is selected from 2,5-Dimethyl 2,5-di(tert-butylperoxy) hexane and di(tert-butylperoxyisopropyl) benzene, more preferably the peroxide is 2,5-Dimethyl 2,5-di(tert-butylperoxy) hexane.

9. Process according to any of the preceding claims, whereby the barrel temperature profile is an isothermal profile.

10. Process according to any of the preceding claims, whereby the ratio of SHI_{2.7/210} of the mixed-plastic-polyethylene reactant blend measured by dynamic shear measurement according to ISO 6721-1 and ISO 6721-10 versus the SHI_{2.7/210} of the controlled rheology modified mixed-plastic-polyethylene blend measured by dynamic shear measurement according to ISO 6721-1 and ISO 6721-10 is from 1.20 to 3.0, more preferably 1.30 to 2.80.

11. Controlled rheology modified mixed-plastic polyethylene blend obtainable by the process of claims 1 to 10 having
(i) a tensile modulus (ISO 527-1,2) of from 750 to 1100 MPa when measured on an injection molded test specimen; and/or
(ii) an impact strength (ISO 189-1, 23°C) of from 20.0 to 40.0 kJ/m², and/or
(iii) an OCS gel content of all sizes of from 2000 to 50000 / m² when measured on a film of a OCS meter; and/or
(iv) an XHU (ISO 16152; first edition; 2005-07-01, 25 °C) of from 0.10 to 1.0 wt%, more preferably from 0.10 to 0.50 wt%.

12. Use of a
- peroxide masterbatch containing a polypropylene resin and 2.0 to 7.0 wt.-% of a peroxide with the peroxide having a half life time of 5 to 15 hours at 120°C at a concentration of 0.1 M in benzene
for providing impact strength (ISO 189-1, 23°C) of at least 20 kJ/m² of a mixed-plastic-polyethylene reactant blend originating from 90 to 100 wt.-% from a waste stream and having
- a melt flow rate (ISO 1133, 2.16 kg load, 190°C) of 0.50 to 1.4 g/10min; and
- a content of units derived from ethylene of 80 to 95 wt.-% as determined by quantitative ¹³C{¹H}-NMR
by
melt compounding the mixed-plastic polyethylene reactant blend in the presence of said peroxide masterbatch, optionally in the presence of antioxidant, in an extruder with a screw speed of from 100 to 400 rpm and a barrel temperature set in the range from 150°C to 250°C.

13. Use of a
- peroxide masterbatch containing a polypropylene resin and 2.0 to 7.0 wt.-% of a peroxide with the peroxide having a half life time of 5 to 15 hours at 120°C at a concentration of 0.1 M in benzene
for lowering polyethylene black spot values, as defined in the methods under gel count and black spots, of a mixed-plastic-polyethylene reactant blend originating from 90 to 100 wt.-% from a waste stream and having
- a melt flow rate (ISO 1133, 2.16 kg load, 190°C) of 0.50 to 1.4 g/10min; and
- a content of units derived from ethylene of 80 to 95 wt.-% as determined by quantitative ¹³C{¹H}-NMR
by
melt compounding the mixed-plastic polyethylene reactant blend in the presence of said peroxide masterbatch, optionally in the presence of antioxidant, in an extruder with a screw speed of from 100 to 400 rpm and a barrel temperature set in the range from 150°C to 250°C.

14. Use of a
- peroxide masterbatch containing a polypropylene resin and 2.0 to 7.0 wt.-% of a peroxide with the peroxide having a half life time of 5 to 15 hours at 120°C at a concentration of 0.1 M in benzene
for lowering polyethylene gel values, as defined in the methods under gel count and black spots, of a mixed-plastic-polyethylene reactant blend originating from 90 to 100 wt.-% from a waste stream and having
- a melt flow rate (ISO 1133, 2.16 kg load, 190°C) of 0.50 to 1.4 g/10min; and
- a content of units derived from ethylene of 80 to 95 wt.-% as determined by quantitative ¹³C{¹H}-NMR
by
melt compounding the mixed-plastic polyethylene reactant blend in the presence of said peroxide masterbatch, optionally in the presence of antioxidant, in an extruder with a screw speed of from 100 to 400 rpm and a barrel temperature set in the range from 150°C to 250°C.

15. Use according to claim 12, 13, or 14, wherein the barrel temperature profile is an isothermal profile, and/or wherein the peroxide is selected from 2,5-Dimethyl 2,5-di(tert-butylperoxy) hexane and di(tert-butylperoxyisopropyl) benzene, more preferably the peroxide is 2,5-Dimethyl 2,5-di(tert-butylperoxy) hexane.
